# EUROPÄISCHE PATENTSCHRIFT

(11) **EP 3 002 325 B1**
(45) Veröffentlichungstag und Bekanntmachung des Hinweises auf die Patenterteilung: **30.12.2020**
(21) Anmeldenummer: 14187124.4
(22) Anmeldetag: 30.09.2014
(51) Int. Cl.: C10J 3/76, C01B 3/32

(54) **Kraftwerksanlage und Verfahren zum Erzeugen von elektrischem Strom**
Power plant and method for generating electric power
Centrale électrique et procédé pour produire du pouvoir électrique

(43) Veröffentlichungstag der Anmeldung: 06.04.2016
(73) Patentinhaber: Lumenion AG, 6301 Zug (CH)
(72) Erfinder: Zwinkels, Andrew, 10827 Berlin (DE)
(74) Vertreter: Ridderbusch, Oliver

(56) Entgegenhaltungen:
- DE-A1-102005 046 746
- US-A1- 2001 039 760
- US-A1- 2003 008 183
- US-A1- 2005 008 904
- US-A1- 2005 238 933

## Beschreibung

Die Erfindung betrifft in einem ersten Gesichtspunkt eine Kraftwerksanlage zum Erzeugen von elektrischem Strom nach Anspruch 1.

In einem weiteren Aspekt bezieht sich die Erfindung auf ein Verfahren zum Betreiben einer Kraftwerksanlage nach Anspruch 7.

Eine gattungsgemäße Kraftwerksanlage zur Erzeugung elektrischen Stroms umfasst eine Reformer-Einheit, in welcher ein Energieträger unter Wärmezufuhr in ein Verbrennungsfluid umsetzbar ist; eine Reformer-Brenneinrichtung, in welcher zum Bereitstellen einer Wärmezufuhr für die Reformer-Einheit ein Energieträger verbrennbar ist; und eine Stromerzeugungsvorrichtung, welche dazu eingerichtet ist, ein Verbrennungsfluid zu verbrennen und damit elektrischen Strom zu erzeugen.

Bei einem gattungsgemäßen Verfahren zum Betreiben einer Kraftwerksanlage zur Erzeugung elektrischen Stroms ist vorgesehen, dass mit einer Reformer-Einheit ein Energieträger unter Wärmezufuhr in ein Verbrennungsfluid umgesetzt wird; dass mit einer Reformer-Brenneinrichtung zum Bereitstellen einer Wärmezufuhr für die Reformer-Einheit ein Energieträger verbrannt wird; und dass mit einer Stromerzeugungsvorrichtung ein Verbrennungsfluid verbrannt und damit elektrischer Strom erzeugt wird.

Üblicherweise wird ein bedeutsamer Anteil der in einem Staat insgesamt erzeugten elektrischen Energie in Kraftwerksanlagen der oben genannten Art gewonnen. Die von der Reformer-Einheit genutzten Energieträger können je nach Kraftwerksanlage verschieden sein und beispielsweise Kohle, Gas oder Öl umfassen. Diese werden von der Reformer-Einheit in das Verbrennungsfluid umgesetzt, welches zum Beispiel Synthesegas sein kann.

Bei der Reformer-Einheit kann es sich beispielsweise um einen Kohlevergaser handeln. Unter Wärmezufuhr wird in diesem pulverförmige Kohle zu Synthesegas umgesetzt. Dieses wasserstoffhaltige Gasgemisch wird auch als Syngas bezeichnet. Die Reaktion kann beschrieben werden durch:

C + H₂O → CO + H₂ + 175,4kJ.

Anschließend kann das Synthesegas (CO + H₂) in der Stromerzeugungsvorrichtung verbrannt werden, womit thermische Energie freigesetzt wird:

CO + H₂ + O₂ → CO₂ + H₂O - 568,8kJ.

Die thermische Energie kann anschließend in der Stromerzeugungsvorrichtung verwendet werden, um elektrische Energie zu produzieren, welche sodann aus der Kraftwerksanlage ausgegeben wird.

In ähnlicher Weise kann die Reformer-Einheit auch ein Gas-Reformer sein, welcher unter Wärmezufuhr Erdgas, das heißt Methan, in Synthesegas umsetzt:

CH₄ + H₂O → CO + 3H₂ + 250,1kJ.

Sodann kann ebenfalls das Synthesegas verbrannt werden, um thermische Energie freizusetzen:

CO + 3H₂ + 2,5O₂ → CO₂ + 3H₂O - 1140,1kJ.

Anstelle von Wasser kann auch Kohlendioxid in der Reformer-Einheit genutzt werden, um Kohle oder Gas umzusetzen:

C + CO₂ → 2CO + 172,5kJ

oder

CH₄ + CO₂ → 2CO + 2H₂ + 247,3kJ.

Indem zunächst Energie zur Syngas-Gewinnung aufgewendet wird und anschließend Energie durch Verbrennen des Syngases freigesetzt wird, kann insgesamt ähnlich viel Energie genutzt werden wie bei herkömmlichen, nicht gattungsgemäßen Kraftwerksanlagen, welche Kohle oder Erdgas direkt verbrennen, um thermische Energie zu gewinnen.

Die Erfindung geht Probleme an, die dadurch entstehen, dass ein wachsender Anteil der insgesamt erzeugten Strommenge durch erneuerbare Energiequellen abgedeckt wird. Insbesondere werden Sonnen- und Windenergie verstärkt zur Stromerzeugung genutzt. Die hierbei erzeugte Energiemenge schwankt zeitlich jedoch stark. Es bestehen kaum Möglichkeiten, die dabei anfallende überschüssige elektrische Energie in größerem Umfang zu speichern. Wie überschüssige elektrische Energie verwendet werden soll, stellt ein schwerwiegendes Problem dar. Nicht selten muss in Zeiten der verstärkten Stromerzeugung elektrische Energie kostenlos oder zu negativen Preisen abgegeben werden.

Prinzipiell ist denkbar, während einer verstärkten Stromerzeugung durch Sonnen- oder Windenergie die vorgenannte Kraftwerksanlage herunterzufahren. Ein Herunterfahren und ein erneutes Anfahren der Kraftwerksanlage ist jedoch in der Regel mit hohen Materialbelastungen verbunden. Zudem kann dies nur verhältnismäßig langsam durchgeführt werden. Die so erreichbaren Geschwindigkeiten genügen nicht, um auf eine schwankende Windmenge oder Sonneneinstrahlung effektiv reagieren zu können.

US 2005/008904 A1 betrifft ein mobiles Brennstoffzellensystem, welches in einem in einem Elektrofahrzeug eingesetzt werden soll. Alternativ kann das Brennstoffzellensystem auch bei einer Photovoltaikanlage genutzt werden. DE 10 2005 046746 A1 betrifft eine Vorrichtung, welche elektrische Energie zwischenspeichern kann. Elektrische Energie kann über eine Elektrolysezelle aufgenommen und über mehrere Schritte in einem geschlossenen Stoffkreislauf wieder als elektrische Energie ausgegeben werden. US 2005/238933 A1 beschreibt eine Brennstoffzelle, welche mit einem reformierten Energieträger versorgt wird. Die Brennstoffzelle soll in Autos, Häusern oder elektronischen Geräten eingesetzt werden. US 2003/0008183 A1 und US 2001/039760 A1 beschreiben jeweils eine Kraftwerksanlage, wobei mit einem Reformer ein Energieträger reformiert und mit einer Gasturbine verstromt wird.

Als eine **Aufgabe** der Erfindung kann daher erachtet werden, eine Kraftwerksanlage und ein Verfahren zum Betreiben einer Kraftwerksanlage anzugeben, welche eine effektive Anpassung an Schwankungen in der verfügbaren Menge elektrischen Stroms ermöglichen.

Diese Aufgabe wird durch die Kraftwerksanlage mit den Merkmalen des Anspruchs 1 und durch das Verfahren mit den Merkmalen des Anspruchs 7 gelöst.

Vorteilhafte Varianten der erfindungsgemäßen Kraftwerksanlage und des erfindungsgemäßen Verfahrens sind Gegenstand der abhängigen Ansprüche und werden außerdem in der folgenden Beschreibung erläutert.

Bei der Kraftwerksanlage der oben genannten Art ist erfindungsgemäß vorgesehen, dass eine Elektrolyse-Vorrichtung vorhanden ist, welche einen Stromaufnahmeanschluss zum Aufnehmen elektrischer Energie aus einem externen Stromnetz aufweist. Die Elektrolyse-Vorrichtung ist dazu eingerichtet, zur chemischen Energiespeicherung aus einem oder mehreren Ausgangsstoffen, insbesondere aus Wasser, mit Hilfe der aufgenommenen elektrischen Energie ein oder mehrere Produkte zu gewinnen, insbesondere H₂ und O₂. Es sind Mittel zum Verbrennen von einem der Produkte vorhanden sind, wobei Energie aus dem Produkt freisetzbar und für die Erzeugung elektrischen Stroms nutzbar ist. Zudem sind Stromausgabeleitungen vorhanden, mit welchen elektrischer Strom, der über das Verbrennungsfluid und über die durch Elektrolyse erzeugten Produkte erzeugt wird, in ein externes Stromnetz einspeisbar ist.

Bei dem Verfahren der oben genannten Art ist erfindungsgemäß vorgesehen, dass eine Elektrolyse-Vorrichtung elektrische Energie aus einem externen Stromnetz aufnimmt. Zur chemischen Energiespeicherung werden in der Elektrolyse-Vorrichtung aus einem oder mehreren Ausgangsstoffen, insbesondere aus Wasser, mit Hilfe der aufgenommenen elektrischen Energie ein oder mehrere Produkte gewonnen werden, insbesondere H₂ und O₂. Mindestens eines der in der Elektrolyse-Vorrichtung erzeugten Produkte wird verbrannt, wobei Energie aus dem Produkt freigesetzt und für die Erzeugung elektrischen Stroms genutzt wird. Elektrischer Strom, der über das Verbrennungsfluid und über die durch Elektrolyse erzeugten Produkte erzeugt wird, wird schließlich in ein externes Stromnetz eingespeist.

Somit kann die Elektrolyse-Vorrichtung insbesondere dazu gestaltet sein, Wasser als Ausgangsstoff mit Hilfe der aufgenommenen elektrischen Energie in die Produkte O₂ und H₂ zu spalten.

Als eine wesentliche Idee der Erfindung kann angesehen werden, dass eine Kraftwerksanlage zur Erzeugung elektrischen Stroms selber elektrischen Strom aus einem externen Stromnetz aufnimmt und diese Energie im Rahmen ihrer eigenen Stromerzeugung nutzt. Ein wesentliches Merkmal der Erfindung besteht darin, dass die aufgenommene elektrische Energie zunächst in chemische Energie umgewandelt wird, welche sich leichter zwischenspeichern lässt als elektrische Energie.

Als wesentlicher Vorteil wird erreicht, dass überschüssige elektrische Energie aus dem externen Stromnetz aufgenommen und zwischengespeichert werden kann. Dies ist insbesondere zu Zeiten eines Überangebots an elektrischer Energie sinnvoll, beispielsweise wenn elektrische Energie zu Negativpreisen verkauft wird. Die Stromerzeugung durch die Kraftwerksanlage erfolgt hingegen sehr gleichmäßig. Dadurch wird es möglich, Spitzen der elektrischen Energiemenge abzumindern und somit sinnvoll zu nutzen.

Allgemein kann unter der Elektrolyse-Vorrichtung jede Vorrichtung verstanden werden, die mit Energie, welche aus der aufgenommenen elektrischen Energie stammt, einen oder mehrere Ausgangsstoffe in ein oder mehrere andere Produkte umzuwandeln, wobei die hierzu aufgewendete Energie zumindest teilweise wiedergewonnen werden kann. Weil sich die Produkte von den Ausgangsstoffen unterscheiden und durch einen Speicherbehälter verhältnismäßig leicht gespeichert werden können, wird der Ausdruck der chemischen Energiespeicherung verwendet.

Bei Wasser als Ausgangsstoff wird durch die Elektrolyse molekularer Wasserstoff erzeugt, welcher zur Wärmeerzeugung verbrannt werden kann. Die Wärmeenergie wird sodann in der Kraftwerksanlage zur Erzeugung elektrischer Energie genutzt, welche schlussendlich über Stromausgabeleitungen aus der Kraftwerksanlage ausgegeben wird. Bei der Elektrolyse wird außerdem molekularer Sauerstoff erzeugt, welcher ebenfalls für Verbrennungsvorgänge in der Kraftwerksanlage genutzt werden kann.

Bei einer bevorzugten Ausgestaltung umfassen die Mittel, mit denen eines oder mehrere der durch Elektrolyse gewonnenen Produkte verbrannt werden, die Stromerzeugungsvorrichtung sowie eine Verbindungsleitung für zu verbrennende Produkte von der Elektrolyse-Vorrichtung zur Stromerzeugungsvorrichtung. Bei einer Elektrolyse von Wasser kann bei dieser Ausführung der produzierte molekulare Wasserstoff H₂ über die Verbindungleitung zu der Stromerzeugungsvorrichtung geleitet werden. Dort wird er zur Stromerzeugung verbrannt.

Es kann auch eine Verbrennungsfluidleitung vorhanden sein, mit welcher Verbrennungsfluid von der Reformer-Einheit zur Stromerzeugungsvorrichtung leitbar ist. Die vorgenannte Verbindungsleitung kann in die Verbrennungsfluidleitung münden. Dadurch wird ein zu verbrennendes Produkt über die Verbindungsleitung und weiter über die Verbrennungsfluidleitung zur Stromerzeugungsvorrichtung geleitet. Das Verbrennungsfluid und das zu verbrennende aus der Elektrolyse erzeugte Produkt werden demnach gemeinsam in die Stromerzeugungsvorrichtung eingeleitet und dort gemeinsam verbrannt. Bei dem Verbrennungsfluid kann es sich insbesondere um Synthesegas handeln, während das Produkt aus der Elektrolyse molekularer Wasserstoff sein kann. Weil Synthesegas ebenfalls molekularen Wasserstoff enthält, eignen sich diese Stoffe besonders zur gemeinsamen Einleitung in die Stromerzeugungsvorrichtung.

Alternativ oder zusätzlich zu der oben beschriebenen Ausführung sind erfindungsgemäß als Mittel, mit denen eines oder mehrere der durch Elektrolyse gewonnenen Produkte verbrannt werden, die Reformer-Brenneinrichtung sowie eine Leitung vorgesehen, mit der ein von der Elektrolyse-Vorrichtung erzeugtes, zu verbrennendes Produkt zur Reformer-Brenneinrichtung leitbar ist. Bei einer Elektrolyse von Wasser kann demnach molekularer Wasserstoff H₂ ebenfalls an die Reformer-Brenneinrichtung geleitet und dort verbrannt werden. In diesem Fall wird die Wärmeenergie von der Reformer-Einheit genutzt, um einen Energieträger in ein Verbrennungsfluid umzuwandeln, beispielsweise um Kohle in Synthesegas umzuwandeln. Es ist auch möglich, dass molekularer Wasserstoff, der durch die Elektrolyse erzeugt wurde, anteilig zu der Reformer-Brenneinrichtung und zu der Stromerzeugungsvorrichtung geführt wird.

Weitere durch die Elektrolyse in der Elektrolyse-Vorrichtung erzeugte Produkte können ebenfalls in der Kraftwerksanlage verwendet werden. Dies trifft zum Beispiel auf molekularen Sauerstoff zu, welcher bei der Elektrolyse von Wasser entsteht. Die Kraftwerksanlage kann eine Brenneinrichtungsleitung aufweisen, mit welcher ein durch Elektrolyse erzeugtes Produkt, insbesondere molekularer Sauerstoff O₂, von der Elektrolyse-Vorrichtung zur Reformer-Brenneinrichtung leitbar ist. Indem reiner Sauerstoff der Reformer-Brenneinrichtung zugeführt werden kann, wird eine weitere Zufuhr von aufbereiteter Frischluft vereinfacht. Vorzugsweise wird der Sauerstoff zuerst mit Frischluft vermengt und anschließend an die Reformer-Brenneinrichtung geleitet.

Für eine besonders effektive chemische Speicherung kann ein erster Produktspeicherbehälter vorhanden sein. In diesem ist ein über die Verbindungsleitung geleitetes Produkt speicherbar. Bei dem Produkt kann es sich insbesondere um molekularen Wasserstoff H₂ handeln. Das Speichern des Wasserstoffs kann auch als Zwischenspeichern bezeichnet werden, womit betont wird, dass der Wasserstoff dem ersten Produktspeicherbehälter wieder entnommen wird, um für die Stromerzeugung verbrannt zu werden.

Um die Gesamtzahl benötigter Speicherbehälter gering zu halten, kann der erste Produktspeicherbehälter mit der Verbrennungsfluidleitung verbunden sein. Dadurch kann er auch Verbrennungsfluid zwischenspeichern. Somit sind hier keine separaten Produktspeicherbehälter für das Verbrennungsfluid und den molekularen Wasserstoff erforderlich.

Alternativ oder zusätzlich kann auch ein zweiter Produktspeicherbehälter vorhanden sein. Mit diesem kann ein über die Brenneinrichtungsleitung geleitetes Produkt zwischengespeichert werden, also insbesondere molekularer Sauerstoff.

In der vorliegenden Offenbarung wird zum einfacheren Verständnis oftmals molekularer Wasserstoff als Produkt der Elektrolyse genannt. Es ist aber zu verstehen, dass in diesen Fällen anstelle von Wasserstoff auch allgemein ein anderes zu verbrennendes Produkt, welches durch Elektrolyse erzeugt wurde, verwendet werden kann.

Das Verbrennungsfluid, das mit der Reformer-Einheit erzeugt wird, ist vorzugsweise Synthesegas, wie oben beschrieben.

Die Reformer-Einheit kann beispielsweise einen Kohlevergaser oder -verflüssiger umfassen. Hier ist also Kohle der Energieträger, der in Verbrennungsfluid umgesetzt wird und auch von der Reformer-Brenneinrichtung zum Bereitstellen einer Wärmezufuhr genutzt wird.

Alternativ oder zusätzlich kann die Reformer-Einheit auch einen Gas-Reformer umfassen, mit dem ein Gas, beispielsweise Erdgas, als Energieträger in das Verbrennungsfluid umsetzbar ist.

Grundsätzlich kann unter der Reformer-Einheit eine beliebige Einrichtung verstanden werden, die unter Energiezufuhr mit einem Energieträger ein Verbrennungsfluid erzeugt. Außer Kohle und Erdgas können prinzipiell auch beliebige organische Stoffe als Energieträger genutzt werden. Zweckmäßigerweise sollte durch Verbrennen des Verbrennungsfluids mehr Energie freigesetzt werden als durch Verbrennen des Energieträgers.

Der Reformer-Brenneinrichtung kann insbesondere Synthesegas als Verbrennungsfluid zugeführt werden, welches nach Verbrennung in der Reformer-Brenneinrichtung eine Temperatur von etwa 1200°C haben kann. Dies dient der Wärmezufuhr für die Reformer-Einheit. Prinzipiell können der Reformer-Brenneinrichtung auch andere Energieträger als Verbrennungsfluide zugeführt werden, beispielsweise derselbe Energieträger, der auch in der Reformer-Einheit als Energieträger genutzt wird.

Die Stromerzeugungsvorrichtung ist dazu gestaltet, aus der Verbrennung eines Verbrennungsfluids elektrischen Strom zu gewinnen. Die Stromerzeugungsvorrichtung umfasst einen Diesel-Generator, bei dem Diesel und/oder andere Verbrennungsfluids verbrannt werden und aus der entstandenen Wärme elektrische Energie erzeugt wird, oder alternativ umfasst die Stromerzeugungsvorrichtung auch eine Turbinen-Generatoreinheit.

Um Schwankungen in der verfügbaren Energiemenge in einem externen Stromnetz ausgleichen zu können, ist der Stromaufnahmeanschluss der Elektrolyse-Vorrichtung vorzugsweise mit einem externen Stromnetz verbunden. Hier wird also nicht, oder nicht nur, elektrische Energie genutzt, die von der Kraftwerksanlage selbst erzeugt wird.

Damit Energiemengenspitzen durch zum Beispiel Sonnen- oder Windenergie aufgefangen werden, muss die von der Elektrolyse-Vorrichtung verwendete elektrische Energie nicht zwangsläufig aus einem externen Stromnetz stammen. Es ist auch möglich, die von der Kraftwerksanlage, das heißt von der Stromerzeugungsvorrichtung, selbst erzeugte elektrische Energie zu nutzen. So umfasst die Stromerzeugungsvorrichtung Stromausgabeleitungen zum Abgeben erzeugter elektrischer Energie an ein externes Stromnetz, wobei über die Stromausgabeleitungen auch eine schaltbare Verbindung zur Elektrolyse-Vorrichtung herstellbar ist. Hierdurch können Leitungsverluste und Preisnachteile vermieden werden, die beim Einspeisen und Entnehmen aus dem externen Stromnetz auftreten können.

Die Elektrolyse-Vorrichtung wird vorzugsweise nicht kontinuierlich betrieben, sondern nur wenn elektrische Energie zu günstigen Preisen bezogen werden kann, insbesondere zu Negativpreisen. Daher fallen mittels der Elektrolyse molekularer Wasserstoff und Sauerstoff in zeitlich schwankenden Mengen an. Diese Schwankungen können durch den oder die Produktspeicherbehälter aufgefangen werden. Dadurch ist die Menge an Verbrennungsfluid und Wasserstoff, welche der Stromerzeugungsvorrichtung zugeführt wird, unabhängig von der momentan von der Elektrolyse-Vorrichtung aufgenommenen elektrischen Energie.

Es können Steuermittel vorgesehen sein, mit denen die Menge an elektrischer Energie, die von der Elektrolyse-Vorrichtung aufgenommen wird, variabel einstellbar ist.

Die Steuermittel können dazu eingerichtet sein, die Menge an elektrischer Energie, die von der Elektrolyse-Vorrichtung aufgenommen wird, abhängig von der Größe einer verfügbaren elektrischen Energie im externen Stromnetz einzustellen. Insbesondere können die Steuermittel so eingerichtet sein, dass sie der Elektrolyse-Vorrichtung nur dann elektrische Energie zuführen, wenn die Größe der verfügbaren elektrischen Energie im externen Stromnetz einen vorgebbaren Grenzwert überschreitet. Alternativ oder zusätzlich können die Steuermittel auch dazu eingerichtet sein, die Menge an elektrischer Energie, die von der Elektrolyse-Vorrichtung aufgenommen wird, kontinuierlich oder stufenweise zu erhöhen, wenn sich die Größe der verfügbaren elektrischen Energie im externen Stromnetz erhöht, und umgekehrt.

Somit kann beispielsweise besonders viel elektrische Energie aufgenommen werden, wenn diese äußerst kostengünstig bezogen werden kann, während mit steigendem Strompreis geringere Energiemengen der Elektrolyse-Vorrichtung zugeführt werden.

So können die Steuermittel Datenaufnahmemittel umfassen, über welche ein Strompreis eingebbar ist.

Die Steuermittel können dazu gestaltet sein, den Strompreis als Maß für die Größe der verfügbaren elektrischen Energie im externen Stromnetz zu nutzen. Je höher der Strompreis, desto niedriger nehmen die Steuermittel die Größe der verfügbaren elektrischen Energie im externen Stromnetz an, und umgekehrt. Das Einstellen der Aufnahme elektrischer Energie durch die Elektrolyse-Vorrichtung kann somit abhängig von einem momentanen Strompreis erfolgen. Dieser kann manuell über die Datenaufnahmemittel eingebbar sein oder alternativ können die Datenaufnahmemittel dazu gestaltet sein, den Strompreis automatisch abzurufen, beispielsweise von einer Strombörse.

Elektronische Steuermittel können so gestaltet sein, dass sie die Kraftwerksanlage die meiste Zeit in einem Normalbetrieb ohne Stromaufnahme durch die Elektrolyse-Vorrichtung steuern (beispielsweise mindestens 60% oder 80% der gesamten Betriebszeit). Der Stromaufnahmebetrieb wird nur in der restlichen Zeit eingestellt. Dadurch wird als Vorteil erreicht, dass elektrischer Strom nur dann aufgenommen und in chemischer Energie gespeichert wird, wenn er zu besonders niedrigen Preisen bezogen werden kann.

Varianten des erfindungsgemäßen Verfahrens ergeben sich durch bestimmungsgemäße Verwendung der vorliegend beschriebenen Komponenten der erfindungsgemäßen Kraftwerksanlage.

Weitere Vorteile und Merkmale der Erfindung werden nachstehend mit Bezug auf die beigefügten schematischen Figuren beschrieben.
- Fig. 1: zeigt ein Ausführungsbeispiel einer erfindungsgemäßen Kraftwerksanlage.
- Fig. 2: zeigt ein weiteres Ausführungsbeispiel einer erfindungsgemäßen Kraftwerksanlage.

Gleiche und gleich wirkende Komponenten sind in beiden Figuren mit denselben Bezugszeichen versehen.

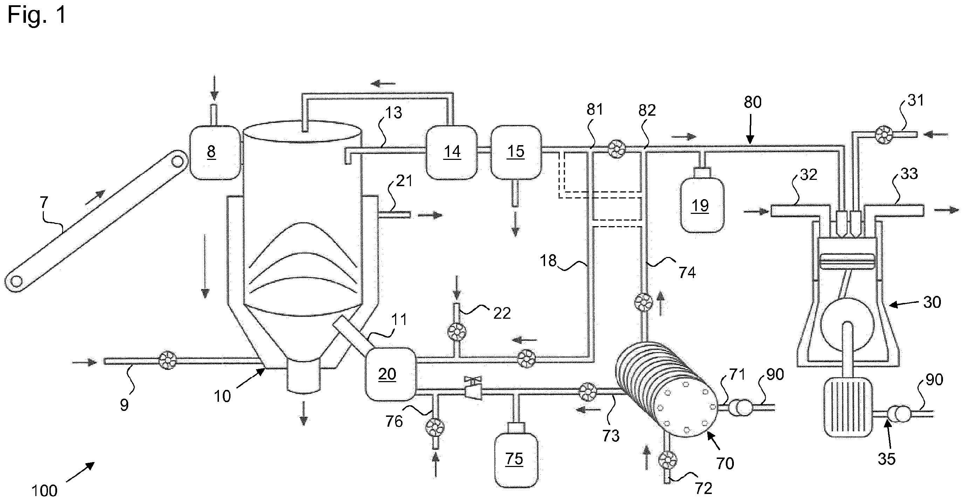

Fig. 1 zeigt schematisch ein Ausführungsbeispiel einer erfindungsgemäßen Kraftwerksanlage 100 zur Erzeugung elektrischen Stroms. Als wesentliche Komponenten umfasst die Kraftwerksanlage 100 eine Reformer-Einheit 10, eine Stromerzeugungsvorrichtung 30 und eine Elektrolyse-Vorrichtung 70.

In der Reformer-Einheit 10 wird unter Wärmezufuhr ein Energieträger, beispielsweise Kohle, in ein Verbrennungsfluid umgewandelt, beispielsweise in Synthesegas. Das Synthesegas wird in der Stromerzeugungsvorrichtung 30 verbrannt und die so entstehende Wärmeenergie wird weiter in elektrischen Strom umgewandelt. Über die Elektrolyse-Vorrichtung 70 ist es möglich, elektrische Energie aufzunehmen und in chemische Energie umzuwandeln. Diese kann sodann weiter im Rahmen der Stromerzeugung durch die Stromerzeugungsvorrichtung 30 genutzt werden. Insbesondere können die Produkte, durch die die chemische Energie gespeichert ist, verbrannt werden und die so entstandene Wärmeenergie kann in der Stromerzeugungsvorrichtung zur Erzeugung elektrischer Energie genutzt werden.

Die Reformer-Einheit 10 weist Zuführmittel 7 zum Einleiten von Kohle in die Reformer-Einheit 10 auf. Vor dem Einleiten kann die Kohle eine Aufbereitungsstation 8 durchlaufen. Die Reformer-Einheit 10 verfügt weiterhin über eine Wärmezufuhrleitung 11. Durch diese kann ein stark erhitztes Medium in die Reformer-Einheit 10 eintreten. Mit Hilfe dieser Wärmeenergiezufuhr wird die Kohle in Synthesegas umgewandelt, welches Kohlenmonoxid und molekularen Wasserstoff umfassen kann. Verbrannte Kohleasche kann aus einem Auslass 12, der sich an einer Unterseite der Reformer-Einheit 10 befindet, abgegeben werden.

Über eine Einlassleitung 9 kann zudem Wasser mantelförmig um die Reformer-Einheit 10 herum geleitet werden und sodann dampfförmig über eine Auslassleitung 21 abgegeben werden.

Das erzeugte Synthesegas wird über eine Abgabeleitung 13 an einem oberen Bereich aus der Reformer-Einheit 10 weitergeleitet. Darauf folgend kann das Synthesegas in Reinigungsstationen 14 und 15 aufbereitet werden. Insbesondere können von der Station 14 im Synthesegas mitgeführte Bestandteile zurück in die Reformer-Einheit 10 geleitet werden und die Station 15 kann beispielsweise Schwefel und Säuren entfernen.

Daraufhin wird der Strom an Synthesegas an einer Abzweigungsstelle 81 aufgeteilt. Ein Anteil wird über weiter über eine Verbrennungsfluidleitung 80 zu der Stromerzeugungsvorrichtung 30 geleitet und dort verbrannt.

Die Stromerzeugungsvorrichtung 30 kann beispielsweise als Diesel-Generator gebildet sein. Dieser kann über einen Anschluss 31 zum Einleiten eines weiteren Verbrennungsfluids, beispielsweise Bio-Diesel, verfügen. Zudem ist ein Anschluss 32 zum Einleiten von Frischluft und ein Auslass 33 zum Ableiten von Abgasen vorhanden. Die Stromerzeugungsvorrichtung 30 weist Stromausgabeleitungen 35 auf, über welche erzeugter elektrischer Strom an ein externes Stromnetz 90 abgegeben werden kann. Unter dem externen Stromnetz 90 kann ein Stromnetz verstanden werden, an welches beliebige Verbraucher angeschlossen werden können, die nicht Bestandteil der Kraftwerksanlage 100 sind.

Ein anderer Anteil des erzeugten Synthesegases gelangt von der Abzweigungsstelle 81 über eine Verbindungsleitung 18 zu einer Reformer-Brenneinrichtung 20. In dieser wird das Synthesegas verbrannt. Die so erzeugte Wärmeenergie wird über die Wärmezufuhrleitung 11 der Reformer-Einheit 10 zugeführt, um weiteres Synthesegas zu erzeugen.

Zur Erzeugung von Synthesegas ist außerdem eine Wasserzufuhr vorgesehen. So ist eine Zuführleitung 22 für Wasser mit der Verbindungsleitung 18 verbunden. Dadurch gelangt Wasser ebenfalls in die Reformer-Brenneinrichtung 20, von wo es dampfförmig über die Leitung 11 in die Reformer-Einheit 10 gelangt.

Als wesentliche Idee der Erfindung ist eine Elektrolyse-Vorrichtung 70 vorhanden. Diese verfügt über eine Einlassleitung 72 zum Einleiten eines Ausgangsstoffs, hier Wasser. Über einen Stromaufnahmeanschluss 71 nimmt die Elektrolyse-Vorrichtung 70 elektrische Energie auf. Diese nutzt sie für eine Elektrolyse, bei welcher das eingeleitete Wasser in Wasserstoff H₂ und Sauerstoff O₂ gespalten/umgewandelt wird. Der Stromaufnahmeanschluss 71 ist mit einem externen Stromnetz 90 verbunden. So kann insbesondere elektrische Energie aufgenommen werden, die nicht in der Kraftwerksanlage 100 selbst erzeugt worden ist.

Mit nicht dargestellten Steuermitteln wird die Elektrolyse-Vorrichtung 70 vorzugsweise nicht durchgängig betrieben. Das heißt, die Elektrolyse erfolgt nicht durchgängig, während mit der Stromerzeugungsvorrichtung 30 elektrischer Strom produziert wird. Vielmehr kann vorgesehen sein, dem externen Stromnetz 90 nur dann elektrische Energie zu entnehmen, wenn diese im Überschuss vorhanden ist. Dies kann beispielsweise über einen Strompreis definiert sein. Beispielsweise wird elektrische Energie (=elektrischer Strom) nur dann aufgenommen, wenn ein Strompreis unter einen festlegbaren Grenzwert sinkt. Besonders niedrige Strompreise können insbesondere auftreten, wenn durch regenerative Energiequellen wie Windenergie oder Sonnenenergie vorübergehend überdurchschnittlich viel elektrische Energie erzeugt wird.

Durch die Elektrolyse-Vorrichtung 70 kann elektrische Energie in chemische Energie umgewandelt werden. Unter chemischer Energie kann die Energie verstanden werden, die freigesetzt werden kann, wenn die Elektrolyse-Produkte, hier H₂ und O₂, zum Ausgangsstoff, hier Wasser H₂O, zurückreagieren. Somit kann überschüssige elektrische Energie in chemische Energie umgewandelt und so gespeichert werden.

Als weiterer wesentlicher Gedanke der Erfindung wird die gewonnene chemische Energie in der Kraftwerksanlage 100 zur Stromerzeugung genutzt. Für eine gewünschte Menge an den Stromausgabeleitungen 35 auszugebender elektrischer Energie wird durch die Nutzung der gespeicherten chemischen Energie vorteilhafterweise eine geringere Menge an Brennstoff / Verbrennungsfluid benötigt.

So ersetzt der molekulare Wasserstoff H₂ im Betrieb der Kraftwerksanlage 100 einen Teil des Verbrennungsfluids. Im dargestellten Beispiel führt eine Verbindungsleitung 74 den Wasserstoff H₂ von der Elektrolyse-Vorrichtung 70 zu einer Verbindungsstelle 82, an welcher der Wasserstoff H₂ in die Verbrennungsfluidleitung 80 eingeleitet wird. Dadurch gelangt der Wasserstoff zusammen mit dem Synthesegas zur Stromerzeugungsvorrichtung 30, wo er verbrannt wird und mit der so freigesetzten Energie elektrische Energie gewonnen wird.

Es kann ein Speicherbehälter 19 vorgesehen sein, in welchem durch Elektrolyse erzeugter Wasserstoff zwischengespeichert wird. Der Speicherbehälter 19 kann mit der Verbrennungsfluidleitung 80 verbunden sein, womit außer dem Wasserstoff auch das Synthesegas von der Reformer-Einheit 10 zwischengespeichert werden kann. Durch diese Anordnung kann auf separate Speicherbehälter für den Wasserstoff und das Synthesegas verzichtet werden.

Steuermittel können vorhanden und dazu eingerichtet sein, Wasserstoff und Synthesegas abhängig davon in den Speicherbehälter 19 zu leiten, ob mit der Elektrolyse-Vorrichtung 70 momentan molekularer Wasserstoff gewonnen wird. Beispielsweise können Wasserstoff und Synthesegas dann in den Speicherbehälter 19 eingeleitet werden, wenn die Elektrolyse-Vorrichtung 70 aktiv ist. Wenn die Elektrolyse-Vorrichtung 70 hingegen inaktiv ist, kann vorgesehen sein, Wasserstoff und Synthesegas aus dem Speicherbehälter 19 zur Stromerzeugungsvorrichtung 30 zu leiten.

Es kann vorgesehen sein, dass bei aktiver Elektrolyse-Vorrichtung 70 ein größerer Strom an Wasserstoff und Synthesegas in den Speicherbehälter 19 eingeleitet wird, als bei inaktiver Elektrolyse-Vorrichtung 70 dem Speicherbehälter 19 entnommen wird. Dadurch wird dem Umstand Rechnung getragen, dass die Umwandlung elektrischer Energie in zunächst chemische Energie und dann über Zwischenschritte wieder zu elektrischer Energie nur dann sinnvoll ist, wenn elektrische Energie zu besonders niedrigen Preisen bezogen werden kann. Dies ist in der Regel nur bei Spitzen durch Wind- und Sonnenenergie der Fall, beispielsweise höchstens 15 oder 30 Stunden pro Woche.

Durch die Elektrolyse von Wasser wird auch molekularer Sauerstoff O₂ erzeugt. Dieser wird ebenfalls (zumindest teilweise) in der Kraftwerksanlage 100 genutzt. So ist im dargestellten Beispiel eine Brenneinrichtungsleitung 73 vorhanden, mit welcher der Sauerstoff von der Elektrolyse-Vorrichtung 70 zur Reformer-Brenneinrichtung 20 geleitet wird. Vor dem Einleiten in die Reformer-Brenneinrichtung 20 kann über eine Frischluftzufuhr 76 der Sauerstoff mit aufbereiteter Frischluft vermengt werden.

Vorzugsweise ist ein Speicherbehälter 75 für den Sauerstoff vorhanden. Dieser Behälter 75 kann mit der Brenneinrichtungsleitung 73 verbunden sein. Über den Speicherbehälter 75 kann eine gleichmäßige Zufuhr von Sauerstoff an die Reformer-Brenneinrichtung 20 erreicht werden, auch wenn die Elektrolyse-Vorrichtung 70 nicht kontinuierlich eingeschaltet wird.

In dem dargestellten Beispiel werden Wasserstoff H₂ und Sauerstoff O₂ durch eine Elektrolyse von Wasser gewonnen. Prinzipiell können aber auch andere Produkte aus einem oder mehreren anderen Ausgangsstoffen gewonnen werden. Die Nennung von Wasserstoff H₂ und Sauerstoff O₂ im vorliegenden Beispiel dient dem leichteren Verständnis und soll nicht beschränken verstanden werden. Allgemeiner können der Speicherbehälter 75 für Sauerstoff und der Speicherbehälter 19 für Wasserstoff / Verbrennungsfluid auch als Produktspeicherbehälter bezeichnet werden. Weiterhin kann das beschriebene Synthesegas prinzipiell auch durch ein anderes Verbrennungsfluid ersetzt werden.

Bei der abgebildeten Ausführung wird der gewonnene Wasserstoff in der Stromerzeugungsvorrichtung 30 verbrannt. Alternativ oder zusätzlich kann der Wasserstoff aber auch zur Wärmeerzeugung an anderer Stelle in der Kraftwerksanlage 100 verbrannt werden. Auch eine Energienutzung, bei welcher der Wasserstoff mit einem anderen Stoff reagiert und nicht direkt verbrannt wird, ist möglich.

Gestrichelt dargestellt ist in Fig. 1 sind alternative oder ergänzende Fluidleitungen. So kann der gewonnene molekulare Wasserstoff von der Elektrolyse-Vorrichtung auch in die Verbindungsleitung 18 und so zur Reformer-Brenneinrichtung 20 geleitet werden. In diesem Fall werden durch den zusätzlichen Wasserstoff geringere Mengen an Verbrennungsfluid (Synthesegas) in der Reformer-Brenneinrichtung 20 benötigt.

Ebenfalls gestrichelt dargestellt ist die mögliche Ausführung, dass der gewonnene Wasserstoff mit dem Synthesegas vor der Abzweigungsstelle 81 zusammengeführt wird. Dadurch wird der Wasserstoff aus der Elektrolyse sowohl von der Reformer-Brenneinrichtung 20 als auch von der Stromerzeugungsvorrichtung 30 genutzt.

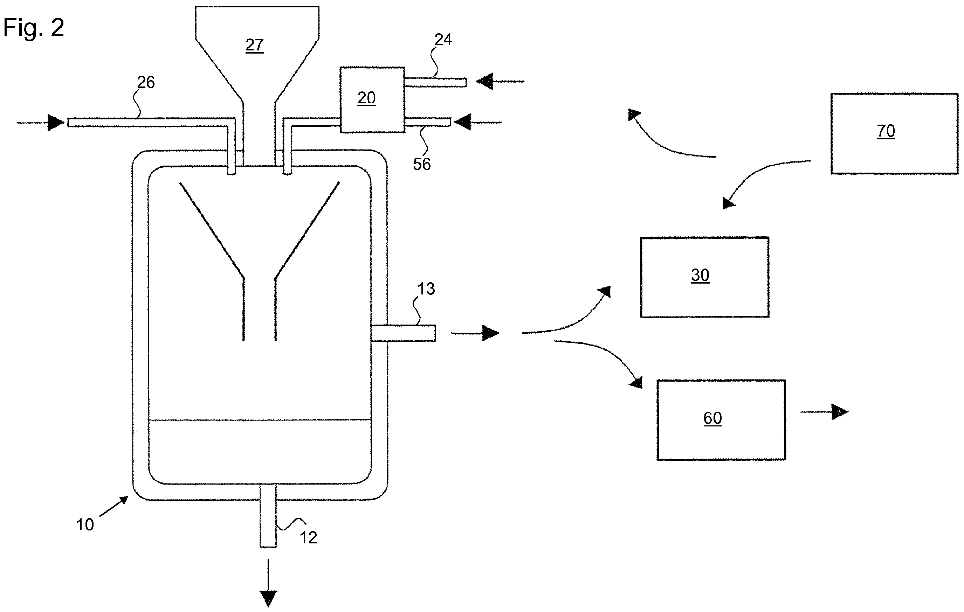

Komponenten eines weiteren Ausführungsbeispiels einer erfindungsgemäßen Kraftwerksanlage sind schematisch in Fig. 2 abgebildet. Die Kraftwerksanlage umfasst hier wiederum eine Reformer-Einheit 10, eine Reformer-Brenneinrichtung 20 sowie die rein schematisch dargestellte Stromerzeugungsvorrichtung 30 und die Elektrolyse-Vorrichtung 70.

Während bei dem Ausführungsbeispiel von Fig. 1 in der Reformer-Einheit 10 ein Gegenstrom erzeugt wird, werden bei dem Beispiel von Fig. 2 sowohl aufbereitetes Wasser über eine Leitung 26 als auch Kohle über einen Zuführschacht 27 und das von der Reformer-Brenneinrichtung 20 erhitzte Fluid im oberen Bereich in die Reformer-Einheit 10 eingeleitet.

Die Reformer-Brenneinrichtung 20 weist hier eine Leitung 56 zum Zuführen von Synthesegas oder anderen Verbrennungsfluiden sowie eine Einlassleitung 24 zum Einleiten von Luft und/oder Sauerstoff auf. Das Verbrennungsfluid, welches der Reformer-Brenneinrichtung zugeführt wird, kann Wasserstoff H₂ der Elektrolyse-Vorrichtung 70 umfassen. Ebenso kann der zugeführte Sauerstoff von der Elektrolyse-Vorrichtung 70 stammen.

Das von der Reformer-Einheit 10 erzeugte Synthesegas kann über eine Abgabeleitung 13 zu der Stromerzeugungsvorrichtung 30 und/oder einer weiteren Verarbeitungsstation 60 geleitet werden, wo es beispielsweise in Methan, Methanol oder einen anderen Energieträger umgesetzt werden kann, insbesondere gemäß dem Fischer-Tropsch-Vorgang.

Mit der erfindungsgemäßen Kraftwerksanlage 100 kann überschüssige elektrische Energie sinnvoll und in großem Umfang gespeichert und genutzt werden. Die beschriebene Lösung erlaubt vorteilhafterweise ein verhältnismäßig einfaches Nachrüsten herkömmlicher Kraftwerksanlagen. Prinzipiell kann sich ein Eingriff bei einer konventionellen Kraftwerksanlage auf die Fluidleitung beschränken, welche erzeugtes Synthesegas zu der Reformer-Brenneinrichtung zurückführt.

Durch die erfindungsgemäßen Ausführungsformen können schwankende Mengen an elektrischer Energie effektiv genutzt werden. Dadurch kann die Akzeptanz der Nutzung regenerativer Energiequellen weiter erhöht werden, da die so bedingte schwankende Menge erzeugter Energie durch die erfindungsgemäße Kraftwerksanlage zumindest teilweise aufgefangen werden kann.

## Patentansprüche

1. Kraftwerksanlage zur Erzeugung elektrischen Stroms mit
- einer Reformer-Einheit (10), in welcher ein Energieträger unter Wärmezufuhr in ein Verbrennungsfluid umsetzbar ist,
- einer Reformer-Brenneinrichtung (20), in welcher zum Bereitstellen einer Wärmezufuhr für die Reformer-Einheit (10) ein Energieträger verbrennbar ist,
- einer Stromerzeugungsvorrichtung (30), welche einen Diesel-Generator oder eine Turbinen-Generatoreinheit umfasst und dazu eingerichtet ist, ein Verbrennungsfluid zu verbrennen und damit elektrischen Strom zu erzeugen,
- wobei die Stromerzeugungsvorrichtung (30) Stromausgabeleitungen (35) zum Abgeben erzeugter elektrischer Energie an ein externes Stromnetz umfasst,
**dadurch gekennzeichnet,**
- **dass** eine Elektrolyse-Vorrichtung (70) vorhanden ist, welche einen Stromaufnahmeanschluss (71) zum Aufnehmen elektrischer Energie aus einem externen Stromnetz (90) aufweist,
- **dass** die Elektrolyse-Vorrichtung (70) dazu eingerichtet ist, zur chemischen Energiespeicherung aus einem oder mehreren Ausgangsstoffen, insbesondere aus Wasser, mit Hilfe der aufgenommenen elektrischen Energie ein oder mehrere Produkte zu gewinnen, insbesondere H₂ und O₂,
- **dass** eine Verbindungsleitung (74) von der Elektrolyse-Vorrichtung (70) zur Stromerzeugungsvorrichtung (30) führt und die Stromerzeugungsvorrichtung (30) zum Verbrennen von einem der Produkte der Elektrolyse-Vorrichtung (70) eingerichtet ist, und/oder
- **dass** eine Brenneinrichtungsleitung (73) vorhanden ist, mit welcher ein durch Elektrolyse erzeugtes Produkt von der Elektrolyse-Vorrichtung (70) zur Reformer-Brenneinrichtung (20) leitbar ist und von der Reformer-Brenneinrichtung (20) verbrennbar ist,
wobei Energie aus dem Produkt freisetzbar und für die Erzeugung elektrischen Stroms nutzbar ist,
- **dass** mit den Stromausgabeleitungen (35) elektrischer Strom, der über das Verbrennungsfluid und über die durch Elektrolyse erzeugten Produkte erzeugt wird, in ein externes Stromnetz (90) einspeisbar ist.

2. Kraftwerksanlage nach Anspruch 1,
**dadurch gekennzeichnet,**
**dass** eine Verbrennungsfluidleitung (80) vorhanden ist, mit welcher Verbrennungsfluid von der Reformer-Einheit (10) zur Stromerzeugungsvorrichtung (30) leitbar ist, und
**dass** die Verbindungsleitung (74) in die Verbrennungsfluidleitung (80) mündet, um ein zu verbrennendes Produkt über die Verbindungsleitung (74) und über die Verbrennungsfluidleitung (80) zur Stromerzeugungsvorrichtung (30) zu leiten.

3. Kraftwerksanlage nach Anspruch 1 oder 2,
**dadurch gekennzeichnet,**
**dass** ein erster Produktspeicherbehälter (19) vorhanden ist, mit welchem ein über die Verbindungsleitung (74) geleitetes Produkt, insbesondere molekularer Wasserstoff H₂, zwischenspeicherbar ist.

4. Kraftwerksanlage nach Anspruch 3,
**dadurch gekennzeichnet,**
**dass** der erste Produktspeicherbehälter (19) mit der Verbrennungsfluidleitung (80) verbunden ist, um auch Verbrennungsfluid zwischenzuspeichern.

5. Kraftwerksanlage nach einem der Ansprüche 1 bis 4,
**dadurch gekennzeichnet,**
**dass** ein zweiter Produktspeicherbehälter (75) vorhanden ist, mit welchem ein über die Brenneinrichtungsleitung (73) geleitetes Produkt zwischenspeicherbar ist.

6. Kraftwerksanlage nach einem der Ansprüche 1 bis 5,
**dadurch gekennzeichnet,**
**dass** Steuermittel vorgesehen sind, mit denen die Menge an elektrischer Energie, die von der Elektrolyse-Vorrichtung (70) aufgenommen wird, variabel einstellbar ist.

7. Verfahren zum Betreiben einer Kraftwerksanlage zur Erzeugung elektrischen Stroms, wobei
- mit einer Reformer-Einheit (10) ein Energieträger unter Wärmezufuhr in ein Verbrennungsfluid umgesetzt wird,
- mit einer Reformer-Brenneinrichtung (20) zum Bereitstellen einer Wärmezufuhr für die Reformer-Einheit (10) ein Energieträger verbrannt wird,
- mit einer Stromerzeugungsvorrichtung (30), welche einen Diesel-Generator oder eine Turbinen-Generatoreinheit umfasst, ein Verbrennungsfluid verbrannt und darüber elektrischer Strom erzeugt wird,
**dadurch gekennzeichnet,**
- **dass** eine Elektrolyse-Vorrichtung (70) elektrische Energie aus einem externen Stromnetz (90) aufnimmt,
- **dass** zur chemischen Energiespeicherung in der Elektrolyse-Vorrichtung (70) aus einem oder mehreren Ausgangsstoffen, insbesondere aus Wasser, mit Hilfe der aufgenommenen elektrischen Energie ein oder mehrere Produkte gewonnen werden, insbesondere H₂ und O₂,
- **dass** mindestens eines der Produkte, die in der Elektrolyse-Vorrichtung (70) erzeugt wurden, von der Elektrolyse-Vorrichtung (70) über eine Verbindungsleitung (74) zur Stromerzeugungsvorrichtung (30) und/oder über eine Brenneinrichtungsleitung (73) zur Reformer-Brenneinrichtung (20) geführt wird, und dort verbrannt wird, wobei Energie aus dem Produkt freigesetzt und für die Erzeugung elektrischen Stroms genutzt wird,
- **dass** elektrischer Strom, der über das Verbrennungsfluid und über die durch Elektrolyse erzeugten Produkte erzeugt wird, in ein externes Stromnetz (90) eingespeist wird.

8. Verfahren nach Anspruch 7,
**dadurch gekennzeichnet,**
**dass** mit Steuermitteln die Menge an elektrischer Energie, die von der Elektrolyse-Vorrichtung (70) aufgenommen wird, abhängig von der Größe einer verfügbaren elektrischen Energie im externen Stromnetz (90) eingestellt wird.

## Claims

1. Power plant for generating electrical power, having
- a reformer unit (10), in which an energy carrier can be converted, with the supply of heat, into a combustion fluid,
- a reformer burning device (20), in which, to provide a heat supply for the reformer unit (10), an energy carrier can be burned,
- a power generator (30), which comprises a diesel generator or a turbine generator unit and is configured to burn a combustion fluid and generate electrical power with it,
- wherein the power generator (30) comprises power output lines (35) for the purpose of outputting generated electrical energy to an external power network,
**characterised in that**
- an electrolysis apparatus (70) is provided, which has a power receiving connection (71) for receiving electrical energy from an external power network (90),
- the electrolysis apparatus (70) is configured, for the purpose of chemical energy storage, to obtain from one or a plurality of starting materials, in particular from water, one or a plurality of products, in particular H₂ and O₂, using the electrical energy taken up,
- a connection line (74) extends from the electrolysis apparatus (70) to the power generator (30) and the power generator (30) is configured to burn one of the products of the electrolysis apparatus (70), and / or
- a burning device line (73) is provided, with which a product produced through electrolysis can be conveyed from the electrolysis apparatus (70) to the reformer burning device (20) and burned by the reformer burning device (20),
wherein energy can be released from the product and used to generate electrical power,
- with the power output lines (35) electrical power generated via the combustion fluid and via the products produced through electrolysis can be supplied to an external power network (90).

2. Power plant according to claim 1,
**characterised in that**
a combustion fluid line (80) is provided, with which combustion fluid can be conveyed from the reformer unit (10) to the power generator (30), and the connection line (74) leads into the combustion fluid line (80) in order to convey a product to be burned via the connection line (74) and via the combustion fluid line (80) to the power generator (30).

3. Power plant according to claim 1 or 2,
**characterised in that**
a first product storage vessel (19) is provided, with which a product conveyed via the connection line (74), in particular molecular hydrogen H₂, can be intermediately stored.

4. Power plant according to claim 3,
**characterised in that**
the first product storage vessel (19) is connected to the combustion fluid line (80) in order to also intermediately store combustion fluid.

5. Power plant according to one of claims 1 to 4,
**characterised in that**
a second product storage vessel (75) is provided, with which a product conveyed via the burning device line (73) can be intermediately stored.

6. Power plant according to one of claims 1 to 5,
**characterised in that**
control means are provided, with which the amount of electrical energy taken up by the electrolysis apparatus (70) can be variably adjusted.

7. Method for operating a power plant for generating electrical power, wherein
- with a reformer unit (10) an energy carrier is converted, with the supply of heat, into a combustion fluid,
- with a reformer burning device (20) an energy carrier is burned in order to provide a heat supply for the reformer unit (10),
- with a power generator (30), which comprises a diesel generator or a turbine generator unit, a combustion fluid is burned and electrical power is generated by means thereof,
**characterised in that**
- an electrolysis apparatus (70) takes up electrical energy from an external power network (90),
- for the purpose of chemical energy storage in the electrolysis apparatus (70) one or a plurality of products, in particular H₂ or O₂, are obtained from one or a plurality of starting materials, in particular from water, using the electrical energy taken up,
- at least one of the products produced in the electrolysis apparatus (70) is conveyed from the electrolysis apparatus (70) via a connection line (74) to the power generator (30) and / or via a burning device line (73) to the reforming burning device (20) and burned there, wherein energy is released from the product and used to generate electrical power,
- electrical power generated via the combustion fluid and via the products produced through electrolysis is supplied to an external power network (90).

8. Method according to claim 7,
**characterised in that**
with control means the amount of electrical energy taken up by the electrolysis apparatus (70) is adjusted in dependence upon the amount of available electrical energy in the external power network (90).

## Revendications

1. Centrale électrique pour générer du courant électrique comprenant :
- une unité de reformeur (10) dans laquelle un vecteur énergétique peut être converti, sous apport de chaleur, en un fluide de combustion,
- un dispositif de combustion de reformeur (20) dans lequel un vecteur énergétique peut être brûlé pour fournir une alimentation en chaleur à l'unité de reformeur (10),
- un dispositif générateur de courant (30), lequel comprend un générateur diesel ou une unité de générateur à turbine et lequel est configuré pour brûler un fluide de combustion et générer du courant électrique avec celui-ci,
- tandis que le dispositif générateur de courant (30) comprend des lignes de sortie de courant (35) ayant pour but de fournir de l'énergie électrique générée à un réseau électrique externe,
**caractérisée en ce que**
- est fourni un dispositif d'électrolyse (70) qui comprend un branchement de réception de courant (71) pour recevoir de l'énergie électrique d'un réseau électrique externe (90),
- le dispositif d'électrolyse (70) est configuré pour produire un ou plusieurs produit(s), en particulier H₂ et O₂, pour stocker chimiquement de l'énergie à partir d'une ou plusieurs matière(s) première(s), en particulier à partir d'eau, à l'aide de l'énergie électrique reçue,
- une conduite de raccordement (74) du dispositif d'électrolyse (70) mène au dispositif générateur de courant (30) et que le dispositif générateur de courant (30) est configuré pour brûler un des produits du dispositif d'électrolyse (70), et/ou
- est fournie une conduite de dispositif de combustion (73) avec laquelle un produit généré par électrolyse peut être conduit du dispositif d'électrolyse (70) au dispositif de combustion de reformeur (20) et peut être brûlé par le dispositif de combustion de reformeur (20),
tandis que de l'énergie peut être libérée du produit et utilisée pour générer du courant électrique,
- grâce aux lignes de sortie de courant (35), du courant électrique, généré par le biais d'un fluide de combustion et par le biais des produits générés par électrolyse, peut alimenter un réseau électrique externe (90).

2. Centrale électrique selon la revendication 1
**caractérisée en ce que**
est fournie une conduite de fluide de combustion (80) avec laquelle du fluide de combustion peut être conduit de l'unité de reformeur (10) vers le dispositif générateur de courant (30), et
la conduite de raccordement (74) débouche dans la conduite de fluide de combustion (80) pour conduire, par le biais de la conduite de raccordement (74) et par le biais de la conduite de fluide de combustion (80), un produit à brûler vers le dispositif générateur de courant (30).

3. Centrale électrique selon la revendication 1 ou 2
**caractérisée en ce que**
est fourni un premier réservoir de stockage de produit (19) avec lequel un produit, en particulier de l'hydrogène moléculaire H₂, conduit par le biais de la conduite de raccordement (74), peut être stocké temporairement.

4. Centrale électrique selon la revendication 3
**caractérisée en ce que**
le premier réservoir de stockage de produit (19) est relié à la conduite de fluide de combustion (80) pour pouvoir également stocker temporairement du fluide de combustion.

5. Centrale électrique selon une des revendications 1 à 4
**caractérisée en ce que**
est fourni un deuxième réservoir de stockage de produit (75) avec lequel un produit conduit par le biais de la conduite de dispositif de combustion (73) peut être stocké temporairement.

6. Centrale électrique selon une des revendications 1 à 5
**caractérisée en ce que**
sont prévus des moyens de commande avec lesquels la quantité d'énergie électrique qui est reçue par le dispositif d'électrolyse (70) peut être ajustée de manière variable.

7. Procédé d'exploitation d'une centrale électrique pour la production de courant électrique, tandis que
- avec une unité de reformeur (10), un vecteur énergétique est converti, sous apport de chaleur, en un fluide de combustion,
- avec un dispositif de combustion de reformeur (20), un vecteur énergétique est brûlé pour mettre à disposition un apport en chaleur pour l'unité de reformeur (10),
- avec un dispositif générateur de courant (30), lequel comprend un générateur diesel ou une unité de générateur à turbine, un fluide de combustion est brûlé et du courant électrique est ainsi produit.
**caractérisé en ce que**
- un dispositif d'électrolyse (70) reçoit de l'énergie électrique à partir d'un réseau électrique externe (90),
- pour le stockage chimique d'énergie dans le dispositif d'électrolyse (70) à partir d'une ou plusieurs matière(s) première(s), en particulier à partir d'eau, un ou plusieurs produit(s), en particulier H₂ et O₂, est ou sont produit(s) à l'aide de l'énergie électrique reçue.
- au moins un des produits qui ont été générés dans le dispositif d'électrolyse (70) est conduit du dispositif d'électrolyse (70) vers un dispositif générateur de courant (30) par le biais d'une conduite de raccordement (74) et/ou conduit, par le biais d'une conduite de dispositif de combustion (73), vers le dispositif de combustion de reformeur (20) et brûlé dans le dispositif de combustion de reformeur (20), tandis que de l'énergie est libérée par le produit et utilisée pour générer du courant électrique,
- du courant électrique, généré par le biais du fluide de combustion et par le biais des produits générés par électrolyse, alimente un réseau électrique externe (90).

8. Procédé selon la revendication 7
**caractérisé en ce que**
grâce aux moyens de commande, la quantité d'énergie électrique reçue par le dispositif d'électrolyse (70) est ajustée en fonction de la quantité d'énergie électrique disponible dans le réseau d'alimentation électrique externe (90).
